# EUROPEAN PATENT SPECIFICATION

(11) **EP 3 585 175 B1**
(45) Date of publication and mention of the grant of the patent: **22.10.2025**
(21) Application number: 18709402.4
(22) Date of filing: 19.02.2018
(51) Int. Cl.: A23L 15/00, A23B 5/005, A23B 5/01, H05B 6/78, A23L 5/30

(54) **MICROWAVE EGG PASTEURIZATION METHOD AND APPARATUS**
MIKROWELLEN-EI-PASTEURISIERUNGSVERFAHREN UND -VORRICHTUNG
PROCÉDÉ ET APPAREIL DE PASTEURISATION D'OEUFS AU MICRO-ONDE

(30) Priority: 22.02.2017 ZA 201701326
(43) Date of publication of application: 01.01.2020
(73) Proprietor: CSIR, 0002 Pretoria (ZA)
(72) Inventor: ROSSOUW, Mathys, Johannes, 1001 Rayton (ZA); DAWLAL, Pranitha, 0002 Pretoria (ZA)
(74) Representative: Marks & Clerk LLP
(86) International application number: PCT/IB2018/050995
(87) International publication number: WO 2018/154422

(56) References cited:
- EP-A1- 2 933 081
- US-A1- 2004 013 774
- US-A1- 2005 233 057
- US-A1- 2012 067 874

## Description

THIS INVENTION relates to the in-shell pasteurization of eggs. In particular, the invention relates to an in-shell egg pasteurization process and to an in-shell egg pasteurization machine or installation or apparatus.

US 8,071,146 and US 8,569,667 describe the problem of *Salmonella enteritides* infection of in-shell eggs, such as in-shell chicken eggs, and the difficulties experienced when attempting to pasteurize whole shell eggs when bearing in mind the required balance between reduction of target organisms and maintenance of albumen quality. Egg yolk proteins are generally more heat-stable than albumen proteins. However, as the target microorganisms are inside the egg yolk, yolk temperatures of in-shell eggs have to be raised high enough without damage to the albumen. US 8,071,146 thus describes an in-shell egg pasteurization process which uses microwave radiation to raise the temperature of albumen of an in-shell egg to between 57°C and 60°C, with the rate at which the albumen temperature is being raised reducing at least once over time. The external surfaces of the in-shell egg is also heated to a temperature of between 57°C and 70°C, ***whereafter*** the albumen temperature and the shell temperature are maintained for a period of time sufficient to pasteurize the egg. During this process, the temperature of the yolk of the in-shell egg is raised, as a result of the microwave radiation, to a temperature higher than that of the albumen.

In order to develop a method and apparatus that can pasteurize in-shell eggs on a commercial scale using microwave irradiation, e.g. using the process of US 8,071,146, and bearing in mind the substantial rate at which commercially available egg sorting and packaging machines can operate, the inventors have attempted, in secret, to use a conveyor with a plurality of in-shell eggs arranged in a two-dimensional matrix, e.g. in sixteen parallel columns of eggs (i.e. providing a plurality of rows each of sixteen eggs with the eggs being in a side-by-side relationship and with the eggs in a row being supported on one or more elongate egg supports), with the sixteen columns being passed together through a common microwave cavity wide enough to accommodate sixteen eggs side-by-side. This arrangement requires that the elongate egg supports, long enough to support sixteen eggs in side-by-side relationship and arranged transverse to a direction of travel of the eggs or conveyor through the microwave cavity, move through the common wide microwave cavity. This has however not worked in practice, as it turned out impossible to obtain a sufficiently homogenous temperature rise in the matrix of eggs passing through the microwave cavity, with some eggs becoming too hot and some eggs remaining too cold. Attempting to improve temperature homogeneity by having longitudinally extending divider walls depending from a roof of the microwave cavity, above the elongate egg supports, i.e. above the conveyor, also did not work. It was not possible to control the microwave heating in the various longitudinally extending, interconnected by the elongate egg supports of the conveyor, microwave sub-cavities formed between the longitudinally extending divider walls, sufficiently accurately to obtain sufficiently homogenous heating of the individual eggs in a transversely extending row of eggs for pasteurization purposes. As a result, some in-shell eggs in a transversely extending row of eggs would remain too cold, and some in-shell eggs in the same transversely extending row of eggs would become too hot.

A process and installation or apparatus or machine that can successfully pasteurize a plurality of in-shell eggs on a scale that is commercially attractive, using microwave irradiation, would be desirable.

According to one aspect of the invention, there is provided an in-shell egg pasteurization process which includes
in a temperature-raising stage, raising the temperature of yolk of a plurality of unpackaged in-shell eggs, simultaneously and at least predominantly by means of microwave radiation, to a pasteurization temperature, the temperature-raising stage including a plurality of elongate or longitudinally extending microwave cavities that are isolated from one another so that microwaves fed into an elongate or longitudinally extending microwave cavity do not leak into any other elongate or longitudinally extending microwave cavity,
with the microwaves being fed into each elongate or longitudinally extending microwave cavity from a feed waveguide located above and associated with each microwave cavity, through a plurality of openings in a roof of each elongate or longitudinally extending microwave cavity which roof defines a floor of the associated feed waveguide, wherein the openings are in the form of spaced slots, with the slots reducing in dimensions in a direction of egg travel, and with the spacing between slots determined by the wavelength of the microwave field,
with the unpackaged in-shell eggs being displaced along the lengths of the elongate or longitudinally extending microwave cavities whilst being irradiated with microwaves;
with the displacing of unpackaged in-shell eggs along the lengths of the elongate or longitudinally extending microwave cavities including passing unpackaged in-shell eggs in side-by-side relationship along the length of each longitudinally extending microwave cavity, the unpackaged in-shell eggs being arranged in 2, 3 or 4 parallel columns within a microwave cavity with the unpackaged in-shell eggs in adjacent columns being aligned in a direction transverse to the direction of travel of the unpackaged in-shell eggs, and with said columns of unpackaged in-shell eggs being displaced together in lock-step fashion through their longitudinally extending microwave cavity, and
with the width of each elongate or longitudinally extending microwave cavity being selected from the following table, depending on the number of columns of unpackaged in-shell eggs in an elongate or longitudinally extending microwave cavity, and with the microwave frequency or the microwave wavelength also being selected from the table:

| Columns of unpackaged in-shell eggs in an elongate or longitudinally extending microwave cavity | Microwave frequency range (GHz) | Microwave wavelength range (cm) | Elongate or longitudinally extending microwave cavity width range (cm) |
|---|---|---|---|
| 2 | 0.3-2.5 | 12-100 | 14-25 |
| 3 | 0.3-1.5 | 20-100 | 21-30 |
| 4 | 0.3-1 | 30-100 | 28-40 |

;and
in a pasteurization stage, maintaining the raised temperatures of the in-shell eggs for a pasteurization time sufficient to pasteurize the in-shell eggs.

The in-shell eggs are thus not yet packaged, being in the form of individual, loose eggs that are displaced through the elongate or longitudinally extending microwave cavities to be heated at least predominantly by microwave radiation, without the need for a liquid heat transfer medium, such as hot water, to transfer heat to the in-shell eggs. The temperature-raising stage can thus be described as a dry temperature-raising stage.

In this specification, "predominantly" is to be interpreted to mean more than half. In other words, "raising the temperature of yolk of a plurality of in-shell eggs, simultaneously and at least predominantly by means of microwave radiation" means that more than half of the energy required to raise the temperature of the yolk of the eggs is provided by microwave radiation.

The pasteurization temperature of the yolk may be between 57°C and 60°C, preferably between 58°C and 60°C, more preferably between 59°C and 60°C. As will be appreciated, as the yolk will become slightly hotter than the albumen during microwave irradiation, controlling or limiting the yolk temperature will also control or limit the albumen temperature, but to a slightly lower maximum temperature, ensuring that the more heat sensitive proteins of the albumen are not denatured to an unacceptable degree.

Preferably, the elongate or longitudinally extending microwave cavities are arranged side-by-side, with longitudinally extending axes of the elongate or longitudinally extending microwave cavities being parallel. The elongate or longitudinally extending microwave cavities may be in the form of rectangular or square tubes, with the in-shell eggs being displaced along the lengths of the tubes whilst being irradiated with microwaves. Openings of the tubes may be reduced in size to act as microwave chokes.

In one embodiment of the invention, the elongate or longitudinally extending microwave cavities are located in a common plane, preferably a common horizontal plane.

The inventors have found that having a single row of eggs moving through a correspondingly sized longitudinally extending microwave cavity (i.e. a microwave cavity or microwave tunnel that is just wide enough to accommodate one egg with some clearance from side walls to prevent arcing between the side walls and the egg) gives the smallest uncertainty in egg temperatures as the microwave field heating a particular egg is not affected by the presence of an adjacent egg (adjacent in a direction transverse to the direction of travel). A process employing a machine or installation employing multiple narrow microwave cavities or tunnels each with a single row of eggs will however be expensive from a capital expenditure perspective, even though it provides more flexibility as the eggs can be graded into fine weight bands and heated to the tightest temperature range.

A process employing a machine or installation employing multiple microwave cavities or tunnels with two or more columns of eggs passing longitudinally through each microwave cavity or tunnel would be less expensive from a capital expenditure perspective, as it would have a smaller component count. Temperature regulation of eggs in such microwave cavities must however not be affected to an unacceptable degree as a result of neighbouring eggs perturbing the microwave field distribution across the width of the microwave cavity. Naturally, a two-egg microwave cavity or tunnel should be just wide enough to accommodate two eggs in side by side arrangement with some clearance from side walls to prevent arcing between the side walls and the eggs.

The inventors have found that there is a limit to the width of, and hence to the number of columns of in-shell eggs that can be accommodated by, an elongate or longitudinally extending microwave cavity that still guarantees an acceptably constant or uniform microwave field extending between opposed side walls of the elongate or longitudinally extending microwave cavity. This limit is dependent on the frequency (or wavelength) of the microwaves fed into an elongate or longitudinally extending microwave cavity.

The in-shell eggs being displaced along the length of an elongate or longitudinally extending microwave cavity may be arranged with a longitudinal axis of each in-shell egg being transverse to the direction of travel of the in-shell egg.

Preferably, adjacent in-shell eggs in a longitudinally extending column of in-shell eggs are spaced at least about 5mm, more preferably at least about 8mm, most preferably at least about 10mm apart.

Preferably, adjacent in-shell eggs in a longitudinally extending column of in-shell eggs are spaced no more than about 50mm, more preferably no more than about 25mm, most preferably no more than about 10mm apart.

Preferably, transversely spaced, transversely aligned in-shell eggs are spaced at least about 3mm, more preferably at least about 5mm, most preferably at least about 10mm apart.

Preferably transversely spaced, transversely aligned in-shell eggs are spaced no more than about 50mm, more preferably no more than about 25mm, most preferably no more than about 10mm apart.

Preferably adjacent in-shell eggs in a direction transverse to the direction of travel of the columns of eggs have their more rounded or less tapered or blunter ends facing each other. These are the ends containing the air sacks of the in-shell eggs. Thus, when two adjacent longitudinally extending columns of eggs pass through a longitudinally extending microwave cavity, the less rounded or more tapered or more pointed ends of in-shell eggs in a longitudinally extending column of eggs preferably face towards a side wall of the longitudinally extending microwave cavity.

The process may include generating microwaves for the elongate or longitudinally extending microwave cavities using a single or common microwave generator, e.g. a magnetron, and feeding microwaves generated by the single or common microwave generator into each elongate or longitudinally extending microwave cavity that has eggs passing through the elongate or longitudinally extending microwave cavity.

The process may include employing one or more, e.g. two, four or eight microwave splitters, to split total microwave power generated by the microwave generator into microwave power portions, and feeding portions of microwave power so obtained to each elongate or longitudinally extending microwave cavity that has eggs passing through the elongate or longitudinally extending microwave cavity. The splitters may be adjustable or controllable, and may form part of a closed control loop.

As will be appreciated, the microwave power required to heat in-shell eggs to the pasteurization temperature is proportional to the mass of in-shell eggs passing through an elongate or longitudinally extending microwave cavity. Hence, the process may include adjusting the amount of microwave power to each elongate or longitudinally extending microwave cavity in order to control the temperature of the eggs. For example, the process may include electrically adjusting the microwave splitters to control the amount of microwave power being fed to individual elongate or longitudinally extending microwave cavities. Once a steady state of operation has been reached, it is expected that little adjustment (say less than 10% more or less than an average feed microwave power to an elongate or longitudinally extending microwave cavity) of microwave power being fed into an elongate or longitudinally extending microwave cavity will be required (assuming a constant feed of eggs graded to fall within an appropriate weight band).

The process may include heating a floor and/or side walls of the longitudinally extending microwave cavities, thereby to also heat at least the external or shell surfaces of the in-shell eggs by means of heat radiation or thermal radiation. This heating may be electrically, e.g. by ohmic or resistance heating, and assists in reducing heat loss from the in-shell eggs being irradiated with microwaves, and hence allows the egg shell temperatures to become hot enough for pasteurization purposes.

The floor and/or the side walls of the longitudinally extending microwave cavities may be heated to a temperature within a range of about 55°C to about 65°C, e.g. about 60°C.

The process may include moving hot air through the temperature-raising stage whilst the temperature of yolk of a plurality of in-shell eggs are being raised simultaneously and at least predominantly by means of microwave radiation to a pasteurization temperature. The hot air may be at a temperature of between about 40°C and about 70°C, preferably between about 50°C and about 65°C, more preferably between about 55°C and about 60°C, e.g. about 58°C. The hot air may be supplied from the pasteurization stage and may flow in an upstream direction along each of the elongate or longitudinally extending microwave cavities, i.e. against the direction of travel of the in-shell eggs.

The external surfaces of the in-shell eggs may be heated to a temperature of between 57°C and 70°C in the temperature-raising stage, preferably to a temperature of between 57°C and 60°C, more preferably to a temperature of between 58°C and 60°C. This temperature rise is typically as a result of microwave irradiation (which provides more than half of the input energy required) and convection heating, or as a result of microwave irradiation and heat or thermal radiation, or as a result of microwave irradiation and convection heating and heat or thermal radiation.

The process may include turning eggs passing through an elongate or longitudinally extending microwave cavity about their longitudinal axes at least while they are within the elongate or longitudinally extending microwave cavity. Preferably, the eggs are also turned about their longitudinal axes when they are within the pasteurization stage.

The eggs may be turned at a rate of one revolution per 0.05m to about 1m, preferably at a rate of 1 revolution per about 0.05 m to about 0.5m, most preferably at a rate of 1 revolution per about 0.2m to about 0.3m, e.g. about 1 revolution per about 0.25m.

According to the invention, microwaves are fed from a feed waveguide located above and associated with an elongate or longitudinally extending microwave cavity, into said elongate or longitudinally extending microwave cavity. The feed waveguide may be parallel with and directly above its associated elongate or longitudinally extending microwave cavity. The roof of the elongate or longitudinally extending microwave cavity defines a floor of its associated feed waveguide. The openings in the roof of an elongate or longitudinally extending microwave cavity may be located centrally, i.e. midway, between sides of an elongate or longitudinally extending microwave cavity.

The temperature of the yolk of said plurality of eggs in the temperature-raising stage is raised at a rate which reduces at least once along the length of an elongate or longitudinally extending microwave cavity, whilst the eggs pass through the elongate or longitudinally extending microwave cavity. In other words, an upstream portion of an elongate or longitudinally extending microwave cavity receives more microwave power than a downstream portion of the same elongate or longitudinally extending microwave cavity. Microwave power density in an elongate or longitudinally extending microwave cavity is thus profiled to reduce at least once, preferably more than once, so that the microwave power density is profiled to progressively reduce the heating rate of in-shell eggs passing through the elongate or longitudinally extending microwave cavity.

According to the invention, the openings in the roof of each elongate or longitudinally extending microwave cavity are in the form of spaced slots, with the slots reducing in dimensions in a direction of egg travel, and with the spacing between slots determined by the wavelength of the microwave field. Typically, the slots have longitudinal axes parallel to the longitudinal axes of the elongate or longitudinally extending microwave cavities. This arrangement preferably results in the heating rate of eggs passing through the elongate or longitudinally extending microwave cavity reducing along an approximate inverse logarithmic curve as a function of position inside the elongate or longitudinally extending microwave cavity.

The process may include elevating the in-shell eggs in an elongate or longitudinally extending microwave cavity above a floor of the elongate or longitudinally extending microwave cavity.

Preferably, the eggs are elevated between about 5mm and about 50mm, more preferably between about 10mm and about 30mm, most preferably between about 15mm and about 20mm, above the floor of an elongate longitudinally extending microwave cavity.

The process may includes measuring a surface temperature of in-shell eggs inside an elongate or longitudinally extending microwave cavity, and correlating the yolk temperature of the eggs based on the surface temperature. Such a correlation may be a linear correlation, with the in-shell egg surface temperature being slightly lower (e.g. about 1°C to about 3°C lower) than the egg yolk temperature. The process may thus include controlling the surface temperature of the in-shell eggs at a selected or predetermined location within each of the longitudinally extending microwave cavities, e.g. at the outlet of each longitudinally extending microwave cavity, thereby indirectly controlling the yolk temperature of the in-shell eggs (to a temperature slightly higher than that of the shell surface). Preferably, the surface temperature of the in-shell eggs is controlled within a narrow range of no more than about 1.5°C below or above a desired or reference surface temperature.

The surface temperature of the in-shell eggs may be measured by means of infrared sensors, in particular passive infrared sensors. The infrared sensors may be located above the in-shell eggs, where the eggs exit an elongate or longitudinally extending microwave cavity.

The process may include displacing in-shell eggs along the lengths of the elongate or longitudinally extending microwave cavities on dedicated conveying means associated with each elongate or longitudinally extending microwave cavity.

The conveying means of an elongate or longitudinally extending microwave cavity may include an endless egg support fed lengthwise through the elongate or longitudinally extending microwave cavity and configured to be displaced in a longitudinal direction of the elongate or longitudinally extending microwave cavity. The endless egg support may enter the elongate or longitudinally extending microwave cavity through an inlet at one end of the elongate or longitudinally extending microwave cavity and may leave the elongate or longitudinally extending microwave cavity through an outlet at an opposed, i.e. downstream, end of the elongate or longitudinally extending microwave cavity. Typically, when inside the elongate or longitudinally extending microwave cavity, the endless egg support is supported on the floor of the elongate or longitudinally extending microwave cavity, and is located between the side walls of the elongate or longitudinally extending microwave cavity, with no portion of the endless egg support extending transversely beyond the side walls, e.g. into an adjacent elongate or longitudinally extending microwave cavity. As will be appreciated, this allows adjacent elongate or longitudinally extending microwave cavities to be isolated from each other, with microwave impenetrable side walls, thereby to ensure the microwaves fed into an elongate or longitudinally extending microwave cavity do not leak from said elongate or longitudinally extending microwave cavity into an adjacent elongate or longitudinally extending microwave cavity.

The endless egg supports of the plurality of elongate longitudinally extending microwave cavities may be driven by a common drive, so that the endless egg supports are all displaced at a common speed through their associated elongate or longitudinally extending microwave cavities.

In one embodiment of the invention, the endless egg supports are driven by geared drive wheels located on a common drive shaft, with the endless egg supports being in the form of chains comprising plates with rotatable egg supporting formations extending between the plates to support two or more columns of spaced in-shell eggs.

The endless egg supports may be configured and dimensioned to space, orientate and/or elevate in-shell eggs as hereinbefore described.

The process may include, in the pasteurization stage, maintaining raised in-shell egg temperatures by means of convection heating, e.g. by means of hot air. The hot air may be slightly warmer than the temperature at which it is desired that the egg shells be kept, e.g. about 2°C to about 5°C warmer. The purpose of the hot air is predominantly to inhibit heat loss from the in-shell eggs inside the pasteurization stage. The heat loss may at least partially be as a result of moisture loss from the in-shell eggs. In one embodiment of the invention, no heating of the in-shell eggs by means of microwave radiation takes place inside the pasteurization stage. The pasteurization stage may thus be free of a microwave cavity.

Each in-shell egg may have a residence time in the temperature-raising stage of at least about 3 minutes, preferably at least about 5 minutes, more preferably at least about 10 minutes, e.g. about 12 minutes.

Each in-shell egg may have a residence time in the temperature-raising stage of at most about 45 minutes, preferably at most about 30 minutes, more preferably at most about 17 minutes.

Each in-shell egg may have a residence time in the pasteurization stage of at least about 7 minutes, preferably at least about 20 minutes, more preferably at least about 35 minutes, e.g. about 40 minutes.

Each in-shell egg may have a residence time in the pasteurization stage of at most about 90 minutes, preferably at most about 60 minutes, more preferably at most about 45 minutes.

The process may include transferring in-shell eggs exiting the temperature-raising stage immediately into the pasteurization stage. In other words, the temperature-raising stage and the pasteurization stage may be immediately adjacent each other, with the conveying means being arranged to displace eggs through both the temperature-raising stage and the pasteurization stage. In one embodiment of the invention, the endless egg supports are thus fed lengthwise through both the temperature-raising stage and the pasteurization stage.

According to another aspect of the invention, there is provided an in-shell egg pasteurization machine which includes one or more microwave generators to generates microwaves;
a temperature raising stage to raise the temperatures of unpackaged in-shell eggs by means of microwave radiation, the temperature raising stage including a plurality of elongate or longitudinally extending microwave cavities that are isolated from one another so that microwaves fed into one elongate or longitudinally extending microwave cavity from a feed waveguide located above and associated with each microwave cavity do not leak into any other elongate or longitudinally extending microwave cavity, each elongate or longitudinally extending microwave cavity having a plurality of openings in a roof of the elongate or longitudinally extending microwave cavity through which microwaves are fed, which roof defines a floor of the associated feed waveguide, wherein the openings are in the form of spaced slots, with the slots reducing in dimensions in a direction of egg travel, and with the spacing between slots determined by the wavelength of the microwave field, the elongate or longitudinally extending microwave cavities being configured to displace unpackaged in-shell eggs in side-by-side relationship together in lock-step fashion through their longitudinally extending microwave cavity along the length of their longitudinally extending microwave cavity, with the unpackaged in-shell eggs being arranged in 2, 3 or 4 parallel columns within a microwave cavity and unpackaged in-shell eggs in adjacent columns being aligned in a direction transverse to the direction of travel of the unpackaged in-shell eggs, and with the width of each elongate or longitudinally extending microwave cavity being selected from the following table, depending on the number of columns of unpackaged in-shell eggs in an elongate or longitudinally extending microwave cavity, and with the microwave frequency or the microwave wavelength also being selected from the table:

| Columns of unpackaged in-shell eggs in an elongate or longitudinally extending microwave cavity | Microwave frequency range (GHz) | Microwave wavelength range (cm) | Elongate or longitudinally extending microwave cavity width range (cm) |
|---|---|---|---|
| 2 | 0.3-2.5 | 12-100 | 14-25 |
| 3 | 0.3-1.5 | 20-100 | 21-30 |
| 4 | 0.3-1 | 30-100 | 28-40 |

; and
a pasteurization stage configured to maintain raised temperatures of in-shell eggs received from the temperature raising stage for a pasteurization time sufficient to pasteurize the in-shell eggs.

Typically, the machine includes conveying means passing longitudinally through each elongate or longitudinally extending microwave cavity to displace in-shell eggs along the lengths of the elongate or longitudinally extending microwave cavities. Preferably, the conveying means also passes through the pasteurization stage to displace in-shell eggs received from the temperature raising stage through the pasteurization stage.

The temperature raising stage may be as hereinbefore described.

The pasteurization stage may be as hereinbefore described.

The elongate or longitudinally extending microwave cavities may be as hereinbefore described.

The elongate or longitudinally extending microwave cavities thus may have a width of between about 14cm and about 25cm, preferably between about 14cm and about 20cm, more preferably between about 16cm and about 18cm, thereby to accommodate two parallel columns on in-shell eggs in side-by-side relationship.

Instead, the elongate or longitudinally extending microwave cavities thus may have a width of between about 21cm and about 30cm, more preferably between about 22cm and about 25cm, thereby to accommodate three parallel columns of in-shell eggs in side-by-side relationship.

The conveying means may be as hereinbefore described.

Preferably, the conveying means is configured to support in-shell eggs in an elongate or longitudinally extending microwave cavity with a longitudinal axis of each in-shell egg arranged transverse to a longitudinal direction of the elongate or longitudinally extending microwave cavity.

The conveying means may be configured to space and/or elevate in-shell eggs as hereinbefore described, and/or to support in-shell eggs with an orientation as hereinbefore described, and/or to turn in-shell eggs as hereinbefore described.

The microwave generator may be connected to each elongate or longitudinally extending microwave cavity by means of one or more microwave waveguides to feed microwaves into each elongate or longitudinally extending microwave cavity. The microwave generator may be configured to generate microwaves within a frequency range and/or wavelength range as hereinbefore described.

The machine may include microwave splitters as hereinbefore described. Typically, the machine includes a controller, preferably a programmable controller, to control by means of the microwave splitters the amount of microwave power fed into each longitudinally extending microwave cavity.

The machine may include heated floor and/or side walls defining the elongate or longitudinally extending microwave cavities. In other words, the machine may include heating means to heat the floor and/or side walls of the elongate longitudinally extending microwave cavities. The heating means may be ohmic or resistance heating means.

The machine may include a hot air generator to generate or produce hot air for the pasteurization stage. The hot air generator may also be configured to displace hot air through each of the elongate or longitudinally extending microwave cavities.

The controller may be configured to control microwave power to each longitudinally extending microwave cavity such that the yolks of the eggs in the temperature raising stage are raised to a pasteurization temperature. The pasteurization temperature may be as hereinbefore described.

The controller may be configured to receive as set points or references the surface temperature of in-shell eggs at a selected or predetermined location within each of the longitudinally extending microwave cavities. Preferably, the controller is configured to control the surface temperature of in-shell eggs at a selected or predetermined location within each of the longitudinally extending microwave cavities within a narrow range of no more than about 1.5°C above or below the set point or reference surface temperature for that longitudinally extending microwave cavity.

The machine may include temperature sensors to measure the surface temperature of in-shell eggs. The temperature sensors may be infrared sensors as hereinbefore described. The temperature sensors may provide in-shell egg surface temperature inputs to the controller, allowing the controller to function with a closed feedback control loop.

In one embodiment of the invention, the machine includes microwave splitters to split total microwave power generated by a microwave generator into microwave power portions, and to feed portions of microwave power so obtained to each elongate or longitudinally extending microwave cavity configured for eggs to pass through the elongate or longitudinally extending microwave cavity, and a controller configured to control microwave power to each elongate or longitudinally extending microwave cavity such that the yolks of the eggs in the temperature raising stage are raised to a pasteurization temperature, the controller being configured to receive as set points or references the surface temperature of in-shell eggs at a selected or predetermined location within each of the elongate or longitudinally extending microwave cavities.

Each elongate or longitudinally extending microwave cavity may be associated with a feed waveguide as hereinbefore described.

The temperature raising stage may be configured in use to raise the temperature of yolk of said plurality of eggs at a rate which reduces at least once along the length of an elongate or longitudinally extending microwave cavity. In other words, in use, an upstream portion of an elongate or longitudinally extending microwave cavity may receive more microwave power than a downstream portion of the same elongate or longitudinally extending microwave cavity. Microwave power density in an elongate or longitudinally extending microwave cavity may thus be as hereinbefore described. Each elongate or longitudinally extending microwave cavity thus has a roof with openings as hereinbefore described.

The invention will now be described, by way of example, with reference to the accompanying diagrammatic drawings, in which
Figure 1 shows a three-dimensional view of one embodiment of an in-shell egg pasteurization machine in accordance with the invention;
Figure 2 shows a side view of the in-shell egg pasteurization machine of Figure 1;
Figure 3 shows a feed end view of the in-shell egg pasteurization machine of Figure 1, but omitting certain features such as microwave splitters;
Figure 4 shows a vertical longitudinal section through a feed waveguide and a longitudinally extending microwave cavity of the in-shell egg pasteurization machine of Figure 1.

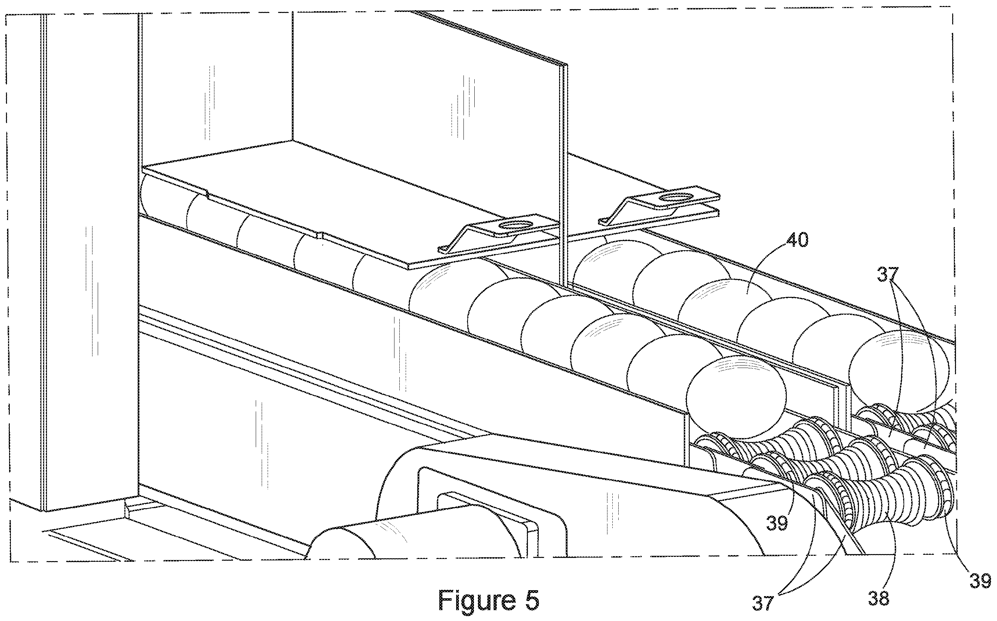

Figure 5 shows a three-dimensional view of a portion of an in-shell egg pasteurization machine with a pair of microwave cavities each configured to accommodate a single column of eggs;
Figure 6 shows a three-dimensional view of a portion of a single longitudinally extending microwave cavity configured to accommodate two columns of eggs, used to investigate microwave field distribution and in-shell egg heating rates in such a microwave cavity;
Figure 7 shows a graph of the temperature of the yolk of an in-shell egg as a function of time, where the egg is pasteurized using the machine of Figure 1;
Figure 8 shows a graph of the distribution of external egg shell temperatures of two columns of in-shell eggs, i.e. a left column and a right column, heated in the experimental longitudinally extending microwave cavity of Figure 6;
Figure 9 shows the log reduction in *salmonella enteritidis* phage types, in two batches of eggs indicated as PT8 and PT4, as a function of egg shell temperature as measured by infrared temperature sensors, when pasteurized using the machine of Figure 1;
Figure 10 shows a graph of the linear relationship between the external egg shell temperature measured by infrared temperature sensor and the temperature of the yolk of the egg measured by means of an optic fibre inserted into the egg;
Figure 11 shows the microwave electric field distribution in the experimental longitudinally extending microwave cavity of Figure 6, with two eggs positioned side-by-side inside the microwave cavity and with the microwaves being fed from a feed waveguide positioned above the longitudinally extending microwave cavity; and

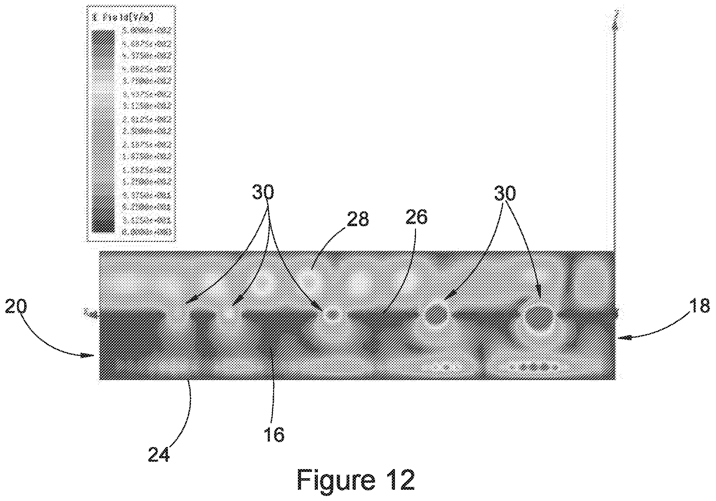

Figure 12 shows the microwave electric field distribution along the length of the experimental longitudinally extending microwave cavity of Figure 6, with the microwaves being fed from a feed waveguide positioned above the longitudinally extending microwave cavity.

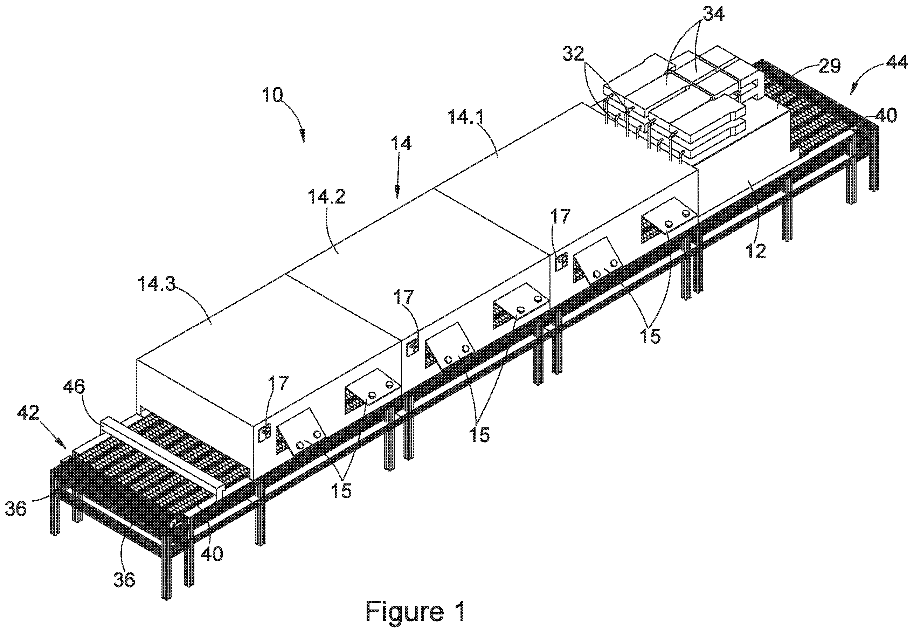

Referring to Figure 1 of the drawings, reference numeral 10 generally indicates an in-shell egg pasteurization machine in accordance with the invention. The machine 10 generally includes a temperature raising stage 12 and a pasteurization stage 14 immediately adjacent the temperature raising stage 12. The machine 10 as illustrated is modular, with the temperature raising stage 12 comprising one module and the pasteurization stage 14 comprising three modules 14.1, 14.2 and 14.3 fitted together to form the pasteurization stage 14.

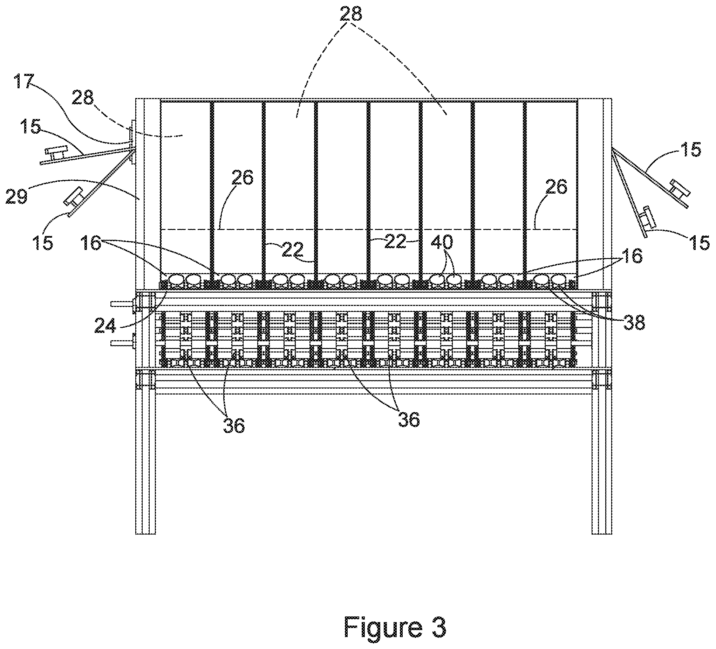

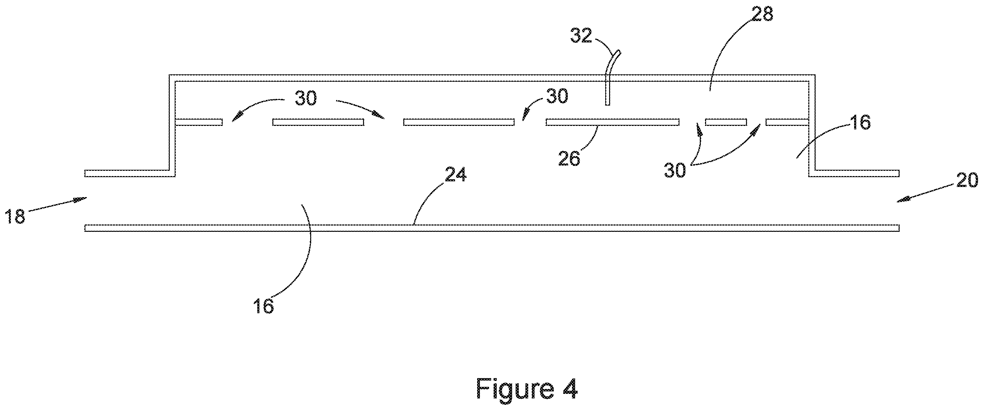

The temperature raising stage 12 includes eight elongate or longitudinally extending microwave cavities 16 (see Figure 3) that are isolated from one another so that microwaves fed into one longitudinally extending microwave cavity 16 do not leak into any other longitudinally extending microwave cavity 16. Each longitudinally extending microwave cavity 16 is thus in the form of a rectangular tube of stainless steel, with a vertical longitudinal section as shown in Figure 4. As will be noticed from Figure 4, an inlet 18 and an outlet 20 of the longitudinally extending microwave cavity 16 have a reduced height compared to the rest of the longitudinally extending microwave cavity 16, with the reductions acting as microwave chokes in use to inhibit escape of microwaves from the longitudinally extending microwave cavity 16.

Each longitudinally extending microwave cavity 16 thus has side walls 22, a floor 24 and a roof 26 formed from stainless steel sheeting with a thickness of about 2 mm. The side walls 22 between adjacent longitudinally extending microwave cavities 16 are not shared, i.e. each longitudinally extending microwave cavity 16 is defined between its own side walls 22, floor 24 and roof 26, with the side walls 22, floor 24 and roof 26 defining a rectangular, elongate tube.

The longitudinally extending microwave cavities 16 are arranged side-by-side, with longitudinally extending axes of the longitudinally extending microwave cavities 16 being parallel and being in a common horizontal plane. Each longitudinally extending microwave cavity 16 has an internal width of about 170 mm and a length of about 2.4 m, allowing the longitudinally extending microwave cavities 16 each to accommodate two columns of in-shell eggs in a side-by-side arrangement for example as shown in Figure 3 of the drawings.

The floor 24 and side walls 22 of each longitudinally extending microwave cavity 16 are electrically heated by means of resistance heating, with the heating being controlled.

Each longitudinally extending microwave cavity 16 is associated with a longitudinally extending microwave feed waveguide 28 (see Figures 3 and 4) extending between the inlet 18 and the outlet 20 of its associated longitudinally extending microwave cavity 16. The feed waveguides 28 are also formed from stainless steel sheeting. The side walls 22 of the longitudinally extending microwave cavity 16 are extended upwardly to define side walls of its associated feed wave guide 28 and the roof 26 of a longitudinally extending microwave cavity 16 defines a floor of its associated feed wave guide 28. Each longitudinally extending microwave cavity 16 and its associated feed waveguide 28 thus together form a modular unit separate from other identical modular units.

The modular units each comprising a longitudinally extending microwave cavity 16 and its associated feed waveguide 28 are positioned side by side inside a housing 29, with heat insulating material (not shown) sandwiched between the housing 29 and the modular units.

Microwave coupling openings 30 are provided in the roof 26 of a longitudinally extending microwave cavity 16. The openings 30 are in the form of spaced longitudinally extending slots reducing in length along the length of the longitudinally extending microwave cavity 16. The openings 30 are located centrally between the side walls 22 of the longitudinally extending microwave cavity 16. In use, microwaves are thus fed from above into each longitudinally extending microwave cavity 16 through the longitudinally spaced microwave coupling openings 30 in the roof 26 of the longitudinally extending microwave cavity 16. The microwaves are generated by or in a common microwave generator, such as a magnetron (not shown) and fed by means of microwave splitters 34 and antennas 32 (see Figure 1) to the feed waveguides 28. The amount of microwave power radiated by means of an antenna 32 into each feed waveguide 28 is controlled by means of the microwave splitters 34, with the microwave splitters 34 in turn being controlled by means of a programmable controller (not shown). Generating, splitting and controlling microwave power are activities well-known to a person skilled in the art and not the focus of the invention and a further description thereof is thus not provided herein.

The pasteurization stage 14 includes said three modules 14.1, 14.2 and 14.3 pushed together to define a longitudinally extending heating cavity within which the temperature of in-shell eggs, raised by means of microwave radiation in the temperature raising stage 12, can be maintained for a pasteurization time sufficient to pasteurize the in-shell eggs. Each module 14.1, 14.2 and 14.3 of the pasteurization stage 14 includes a plurality of electrical heating rods (not shown), arranged to extend lengthwise underneath a roof of the module. These heating rods form part of a hot air generator which also includes a fan or blower (not shown) to agitate the hot air and to displace the hot air slowly through the pasteurization stage 14 and also through the longitudinally extending microwave cavities 16 from their outlets 20 to their inlets 18. Each module 14.1, 14.2, 14.3 of the pasteurization stage 14 also includes a pair of thermocouples (not shown) suspended more or less centrally from the roof of the module 14.1, 14.2, 14.3 to measure the air temperature inside the module 14.1, 14.2, 14.3. Two normally closed inspection doors 15 are provided on both sides of each module 14.1, 14.2, 14.3 of the pasteurization stage 14, and each module 14.1, 14.2, 14.3 of the pasteurization stage 14 also has its own PID temperature controller 17 for controlling the air temperature inside the module by means of the electrical heating rods. No microwaves are in use fed into the pasteurization stage 14 from the microwave generator.

Each longitudinally extending microwave cavity 16 is provided with conveying means to displace individual, loose, unpackaged in-shell eggs longitudinally through the longitudinally extending microwave cavity 16. The conveying means comprises an endless egg support 36 fed lengthwise through its associated longitudinally extending microwave cavity 16. The endless egg supports 36 of all of the longitudinally extending microwave cavities 16 resemble a chain and are each driven by means of a pair of geared drive wheels at a feed end 44 of the pasteurization machine 10, with the pairs of geared drive wheels at the feed end 44 all being located on a common drive shaft driven at a fixed rate by means of an electric motor. The endless egg supports 36 of the various longitudinally extending microwave cavities 16 thus all move at the same speed. Idler geared wheels, also arranged in pairs on a common shaft, are located at a lower elevation than the geared drive wheels, at the feed end 44. If desired however, the lower geared wheels may also be driven so that they do not merely idle.

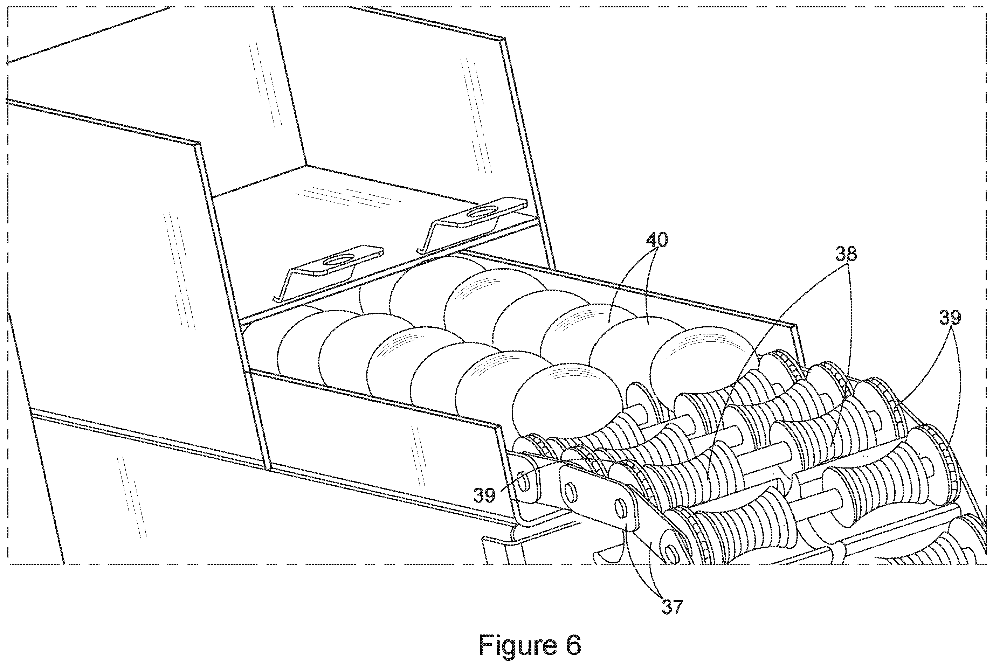

Each endless egg support 36 is in the form of a chain formed by plates or links 37 (see Figure 6), but instead of having conventional link pins and rollers or bushes, the link pins and rollers of the chain are in the form of rotatable egg supporting formations 38. In other words, instead of having a link pin and a roller extending between the plates or links 37 of the chain, the endless egg support 36 has rotatable egg supporting formations 38 for supporting eggs. The plates or links 37 and egg supporting formations 38 are of a synthetic plastics or polymeric material suitable for use in a microwave cavity. Each rotatable egg supporting formation 38 has a pair of solid silicone tyres 39 on which they run, e.g. when inside a longitudinally extending microwave cavity 16.

The rotatable egg supporting formations 38 are configured to support a pair of in-shell eggs 40 in side-by-side relationship between four of the egg supporting formations 38, in the arrangement shown in Figure 6 of the drawings, which is also the arrangement used for the in-shell egg pasteurization machine 10. A longitudinal axis of each in-shell egg 40 is thus transverse to a direction of travel of the in-shell egg 40. Adjacent in-shell eggs 40 in a longitudinally extending column of in-shell eggs 40 are spaced about 5 mm apart by the egg supporting formations 38. In other words, each column of in-shell eggs 40 has a pitch of about 5 mm. Transversely aligned in-shell eggs 40, i.e. adjacent eggs in the two columns of in-shell eggs 40, are spaced about 8 mm.

The egg supporting formations 38 of an endless egg support 36 are in turn supported on their tyres 39 on the floor 24 of the associated longitudinally extending microwave cavity 16 of the endless egg support 36. The egg supporting formations 38 are rotatable about an axis extending laterally between the plates or links 37 of the endless egg support 36. As the endless egg support 36 is thus displaced through its associated longitudinally extending microwave cavity 16, the egg supporting formations 38 rotate on their tyres 39 which in turn causes the in-shell eggs 40 supported on and by the egg supporting formations 38 to rotate, in a direction opposite to the direction of rotation of the egg supporting formations 38, about an axis extending transversely to the direction of travel of the in-shell eggs 40.

The egg supporting formations 38 raise the in-shell eggs 40 above the floor 24 of the longitudinally extending microwave cavity 16 through which the eggs 40 are being displaced. Typically, the in-shell eggs 40 are elevated about 20mm above the floor 24.

The endless egg support 36 of each longitudinally extending microwave cavity 16 also pass through the pasteurization stage 14 (i.e. through each of the modules of the pasteurization stage 14) and are supported on an upper floor of each of the modules of the pasteurization stage 14 so that the in-shell eggs 40 are also rotated as they move through the pasteurization stage 14.

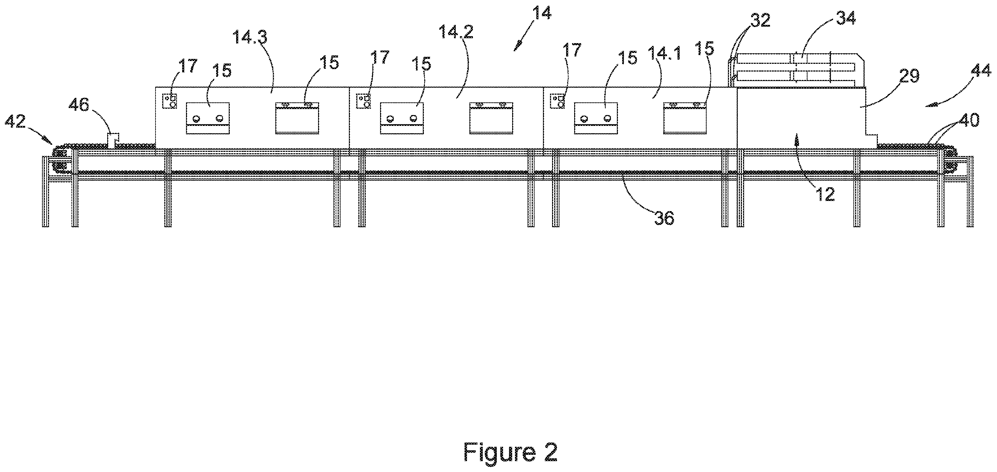

Both the temperature raising stage 12 and the pasteurization stage 14 define a lower floor, below the floor 24 of the longitudinally extending microwave cavity 16 and the upper floor of the pasteurization stage 14, upon which the endless egg supports 36 are supported during their return runs, as can be clearly seen in Figure 2.

Infrared temperature sensors (not shown) are provided at the outlet 20 of each longitudinally extending microwave cavity 16 to measure the external egg shell temperature of the in-shell eggs 40 exiting the longitudinally extending microwave cavities 16. This information is used as input to the programmable controller in order to manipulate the amount of microwave power fed into the longitudinally extending microwave cavity 16. Similarly, infrared temperature sensors (not shown) are provided on an end station 42 of the machine 10 to measure the external egg shell temperature of the in-shell eggs 40 leaving the pasteurization stage 14.

The end station 42 also includes a printer 46 to print pasteurization information, e.g. batch number, date and temperature, on each in-shell egg 40 as it leaves the pasteurization stage 14. Furthermore, the end station 42 provides a pair of geared drive wheels for each endless egg support 36 and, at a lower elevation, a pair of geared idler wheels for each endless egg support 36. The upper geared drive wheels of all of the endless egg supports 36 are on a common shaft and are driven by an electric motor to rotate at the same rate as the geared drive wheels at the inlet end 44 of the machine 10. If desired, the lower geared wheels may also be driven so that they do not merely idle.

The in-shell egg pasteurization machine 10 is typically serviced by, or includes an automated egg loader (not shown) for loading in-shell eggs onto the egg supporting formations 38 at the feed end 44 of the pasteurization machine 10, as well as an automated egg packer (not shown) to remove pasteurized in-shell eggs from the end station 42 and to pack the pasteurized in-shell eggs 40 onto egg trays. The in-shell eggs 40 are typically graded to fall within a preselected weight band.

Thus, in use, graded in-shell eggs 40 are placed, at the feed end 44, on the egg supporting formations 38 of each of the endless egg supports 36, continuously to form continuous columns of in-shell eggs 40, as the endless egg supports 36 are being displaced to feed the columns of in-shell eggs 40 through the temperature raising stage 12 and then through the pasteurization stage 14. Each in-shell egg 40 is placed with a longitudinal axis (i.e. an axis passing through the blunt end and the more pointed end of the in-shell egg 40) of the in-shell egg 40 arranged transversely to the direction of travel of the two egg supporting formations 38 on which the in-shell egg 40 is being supported. Each endless egg support 36 will thus support two columns of in-shell eggs 40, with the in-shell eggs 40 in a left-hand column being in register with the in-shell eggs 40 in a right-hand column, and with all of the in-shell eggs being slowly rotated about their longitudinal axes at a rate of one revolution per about 0.25m. The more rounded or less tapered or blunter ends of the in-shell eggs 40 in the left-hand column face the more rounded or less tapered or blunter ends of the eggs 40 in the right-hand column. In other words, the ends of the in-shell eggs 40 containing the air sacks of the eggs 40 in the two columns are turned towards each other. Advantageously, this arrangement reduces or even eliminates arcing between the eggs of the two adjacent columns of eggs inside the longitudinally extending microwave cavities 16 during microwave irradiation.

Whilst travelling through the longitudinally extending microwave cavities 16 of the temperature raising stage 12, the two side by side columns of in-shell eggs 40 on the endless egg supports 36 are irradiated with microwaves at a frequency of 915 MHz, thereby to heat the in-shell eggs 40 internally. Simultaneously, the eggs 40 are heated externally by means of the heated floors 24 and side walls 22 of the longitudinally extending microwave cavity 16 through which the in-shell eggs 40 are passing. The floors 24 and side walls 22 are typically maintained at a temperature of about 63°C. In addition, hot air generated inside the pasteurization stage 14, at a temperature of about 58°C is displaced upstream through the longitudinally extending microwave cavities 16, against the direction of travel of the in-shell eggs 40. Advantageously, heating of the in-shell eggs 40 externally by means of the heated side walls 22 and floors 24, and by means of the hot air, reduces heat loss from the in-shell eggs 40, e.g. as a result of moisture loss, as they are being irradiated with microwaves.

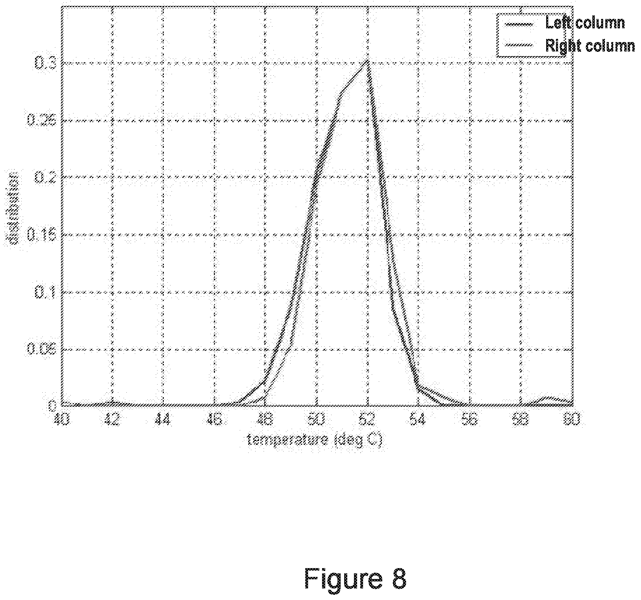

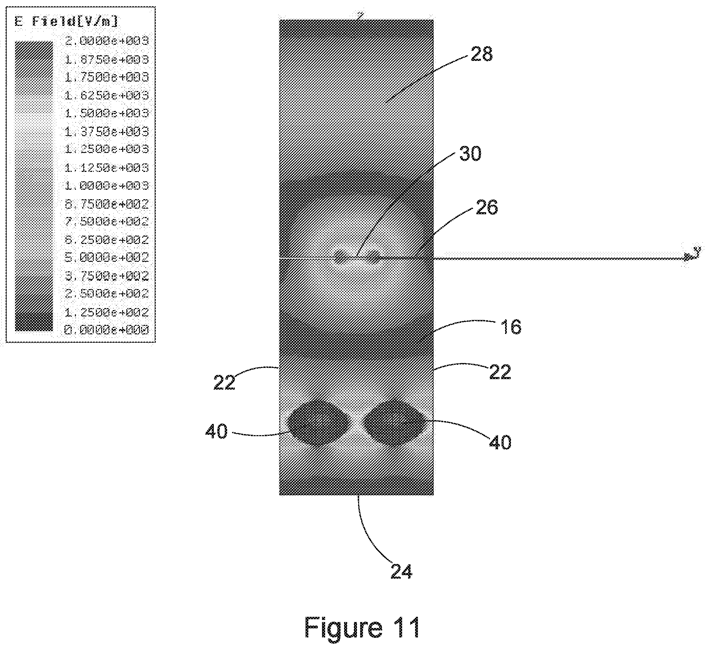

As shown in Figure 11 of the drawings, the microwave electric field distribution in a longitudinally extending microwave cavity 16 is substantially uniform across the width of the longitudinally extending microwave cavity 16. This results in the in-shell eggs 40 in the left-hand column of eggs passing through a longitudinally extending microwave cavity 16 being heated substantially at the same rate, and hence to the same temperature (as they are similar in weight), as in-shell eggs 40 in the right-hand column of eggs passing through the same longitudinally extending microwave cavity 16, as shown in Figure 8 of the drawings.

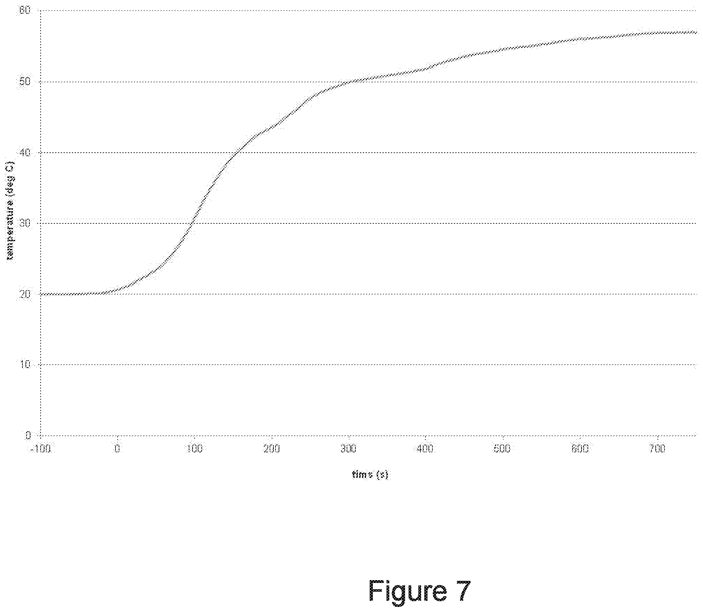

As a result of the sizing and spacing of the microwave coupling openings 30 in the roof 26 of each longitudinally extending microwave cavity 16, more microwave energy enters each longitudinally extending microwave cavity 16 upstream, i.e. closer to the feed end 44 or to the inlet 18, than downstream, i.e. closer to the outlet 20. This results in a typical heating profile for the in-shell eggs 40 as shown in Figure 7 of the drawings. As will be noted, the temperature of the in-shell eggs 40 initially and for a relatively short period increases along an exponential curve but thereafter the rate at which the in-shell eggs 40 are heated reduces, so that the temperature of the in-shell eggs 40 as a function of time, and hence as a function of longitudinal position inside the longitudinally extending microwave cavity 16, eventually follows an inverse logarithmic curve, plateauing out at a target pasteurization temperature, e.g. 59.5°C. Typically, the residence time of the in-shell eggs 40 in the temperature raising stage 12 is about 17 minutes.

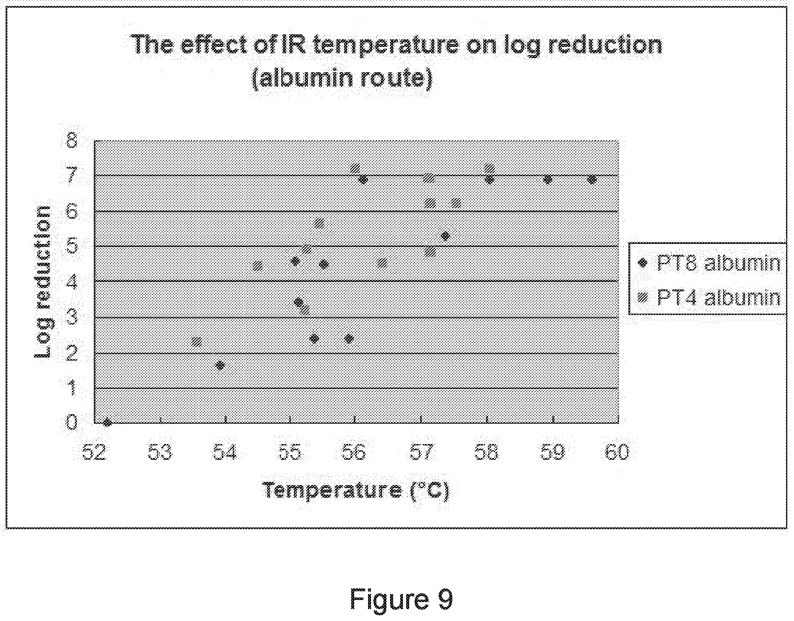

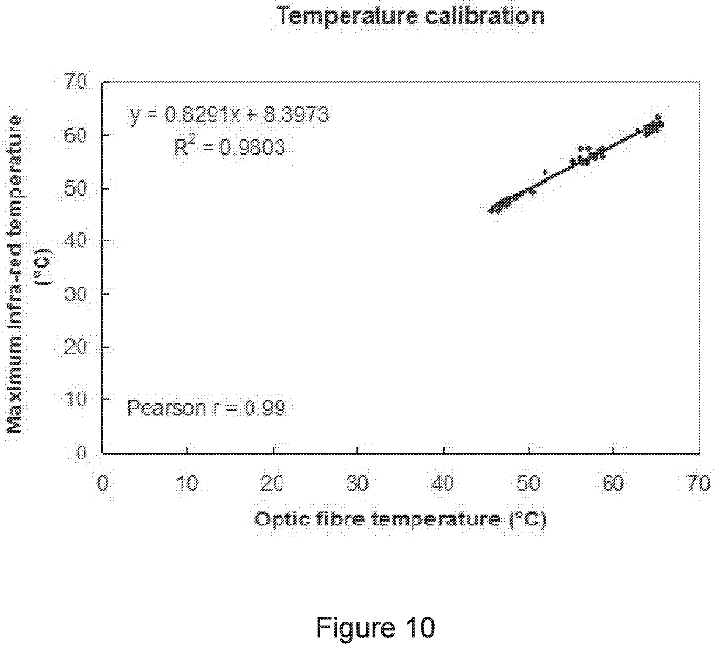

The infrared temperature sensors provided for each column of in-shell eggs 40 measure the external egg shell temperature of an in-shell egg 40 as the egg 40 leaves the temperature raising stage 12. As shown in Figure 10, there is a linear relationship between the measured infrared shell temperature and the internal temperature of the yolk of an in-shell egg 40, as measured by an optic fibre inserted into the yolk. Hence, by controlling the microwave power fed to a longitudinally extending microwave cavity 16 in response to the measured infrared temperatures of the in-shell eggs 40 leaving the pasteurization stage 14, the yolk temperature of the in-shell eggs 40 leaving the pasteurization stage 14 can be controlled between about 57°C and about 60°C. As will be appreciated, with the yolk being controlled at this temperature, the albumen of the in-shell eggs 40 is guaranteed to be at a slightly lower temperature of about 53°C to about 58°C. Furthermore, as shown in Figure 9 of the drawings, with the egg yolk being raised to a temperature of between 57°C and 60°C, and maintained at this temperature for a sufficient pasteurization time, a sufficient log reduction in the target microorganisms, including *Salmonella enteritides* phage type 4 (PT4) and phage type 8 (PT8) is achieved for the eggs to be considered pasteurized.

The in-shell eggs 40 leaving the temperature raising stage 12 immediately enter the pasteurization stage 14 and travel through the modules of the pasteurization stage 14, whilst all the time being rotated slowly about their longitudinal axes. The air temperature inside each module of the pasteurization stage 14 is controlled to be about 58°C and the residence time of the in-shell eggs 40 in the pasteurization stage 14 is about 35 minutes. No microwave energy is fed into the pasteurization stage 14, but heat loss from the in-shell eggs 40 is inhibited by means of the hot air. As the in-shell eggs 40 leave the pasteurization stage 14, the temperature of each in-shell egg 40 is again measured by means of an infrared temperature sensor. Pasteurization information is then printed on the in-shell egg 40 by means of the printer 46 whereafter the in-shell egg 40 is removed and packaged, preferably by an automated egg packer.

The in-shell egg pasteurization machine 10, as illustrated, advantageously allows pasteurization of unpackaged whole in-shell eggs, using microwave energy without damaging the albumen of the in-shell eggs. The machine 10, as illustrated, is able to pasteurize in-shell eggs at a rate of about 4000 eggs per hour, which is commercially attractive. As will be appreciated, this rate can be increased e.g. by increasing the width of each longitudinally extending microwave cavity 16 for example to accommodate three or four columns of in-shell eggs, or by increasing the number of longitudinally extending microwave cavities 16, or by attaching multiple machines to a single high powered microwave source.

Importantly, the longitudinally extending microwave cavities 16 are isolated from one another so that microwave energy does not leak from one longitudinally extending microwave cavity 16 into another longitudinally extending microwave cavity 16, thereby ensuring that microwave field density measured in a direction transverse to the direction of travel of in-shell eggs 40 through a longitudinally extending microwave cavity 16 is substantially uniform, even as the microwave field density is adjusted or controlled in order to control the temperature of the in-shell eggs.

As the microwave splitters are electrically adjustable by means of a closed control loop, the microwave power to each longitudinally extending microwave cavity 16 can individually be controlled. This allows optimum temperature regulation to accommodate changes in the size or mass of eggs in a longitudinally extending microwave cavity 16. Ensuring that the microwave power density in the longitudinally extending microwave cavities 16 is profiled to progressively reduce the heating rate of the in-shell eggs passing through the longitudinally extending microwave cavities 16, the heat flux in the eggs as they approach their target temperatures is reduced, thereby advantageously preventing thermal damage from large temperature variations in the eggs under rapid heating conditions. At the same time, this reduces the total pasteurization processing time required, as the in-shell eggs are initially rapidly heated while they are cold, with the heating rate only later being reduced. In this way thermal damage to the eggs due to extended times at elevated temperatures is minimized.

The apparatus 10, as illustrated, employs non-contact temperature measurement of egg shell temperatures. It has been shown to be a valid method to deduce the temperature of the yolk of the in-shell eggs, which temperature is the critical temperature from a pasteurization point of view.

## Claims

1. An in-shell egg pasteurization process which includes
in a temperature-raising stage, raising the temperature of yolk of a plurality of unpackaged in-shell eggs, simultaneously and at least predominantly by means of microwave radiation, to a pasteurization temperature, the temperature-raising stage including a plurality of elongate or longitudinally extending microwave cavities that are isolated from one another so that microwaves fed into an elongate or longitudinally extending microwave cavity do not leak into any other elongate or longitudinally extending microwave cavity,
with the microwaves being fed into each elongate or longitudinally extending microwave cavity from a feed waveguide located above and associated with each microwave cavity, through a plurality of openings in a roof of each elongate or longitudinally extending microwave cavity which roof defines a floor of the associated feed waveguide, wherein the openings are in the form of spaced slots, with the slots reducing in dimensions in a direction of egg travel, and with the spacing between slots determined by the wavelength of the microwave field,
with the unpackaged in-shell eggs being displaced along the lengths of the elongate or longitudinally extending microwave cavities whilst being irradiated with microwaves,
with the displacing of unpackaged in-shell eggs along the lengths of the elongate or longitudinally extending microwave cavities including passing unpackaged in-shell eggs in side-by-side relationship along the length of each longitudinally extending microwave cavity, the unpackaged in-shell eggs being arranged in 2, 3 or 4 parallel columns within a microwave cavity with the unpackaged in-shell eggs in adjacent columns being aligned in a direction transverse to the direction of travel of the unpackaged in-shell eggs, and with said columns of unpackaged in-shell eggs being displaced together in lock-step fashion through their longitudinally extending microwave cavity, and
with the width of each elongate or longitudinally extending microwave cavity being selected from the following table, depending on the number of columns of unpackaged in-shell eggs in an elongate or longitudinally extending microwave cavity, and with the microwave frequency or the microwave wavelength also being selected from the table:
| Columns of unpackaged in-shell eggs in an elongate or longitudinally extending microwave cavity | Microwave frequency range (GHz) | Microwave wavelength range (cm) | Elongate or longitudinally extending microwave cavity width range (cm) |
|---|---|---|---|
| 2 | 0.3-2.5 | 12-100 | 14-25 |
| 3 | 0.3-1.5 | 20-100 | 21-30 |
| 4 | 0.3-1 | 30-100 | 28-40 |
; and
in a pasteurization stage, maintaining the raised temperatures of the in-shell eggs for a pasteurization time sufficient to pasteurize the in-shell eggs.

2. The process according to claim 1, wherein the elongate or longitudinally extending microwave cavities are arranged side-by-side, with longitudinally extending axes of the elongate or longitudinally extending microwave cavities being parallel.

3. The process according to claim 1 or claim 2, wherein the displacing of unpackaged in-shell eggs along the lengths of the elongate or longitudinally extending microwave cavities includes displacing unpackaged in-shell eggs arranged in only 2 parallel columns with the unpackaged in-shell eggs in adjacent columns being aligned in a direction transverse to the direction of travel of the unpackaged in-shell eggs, and with the 2 columns of unpackaged in-shell eggs being displaced together in lock-step fashion through their longitudinally extending microwave cavity, wherein the microwave frequency range is 0.3 - 2.5 GHz and wherein the width of each elongate or longitudinally extending microwave cavity is in the range of 14 - 25 cm.

4. The process according to any of claims 1 to 3, wherein the unpackaged in-shell eggs being displaced along the length of an elongate or longitudinally extending microwave cavity are arranged with a longitudinal axis of each unpackaged in-shell egg being transverse to the direction of travel of the unpackaged in-shell egg.

5. The process according to any of claims 1 to 4, which includes heating a floor and/or side walls of the elongate or longitudinally extending microwave cavities, thereby to also heat at least the external or shell surfaces of the unpackaged in-shell eggs by means of heat radiation or thermal radiation, and/or which includes moving hot air through the temperature-raising stage whilst the temperature of yolk of a plurality of unpackaged in-shell eggs are being raised simultaneously and at least predominantly by means of microwave radiation to a pasteurization temperature.

6. The process according to any of claims 1 to 5, which includes turning eggs passing through an elongate or longitudinally extending microwave cavity about their longitudinal axes at least while they are within the elongate or longitudinally extending microwave cavity.

7. The process according to any of claims 1 to 6, which includes measuring a surface temperature of unpackaged in-shell eggs inside an elongate or longitudinally extending microwave cavity, and correlating the yolk temperature of the eggs based on the surface temperature.

8. An in-shell unpackaged egg pasteurization machine which includes
one or more microwave generators to generates microwaves;
a temperature raising stage to raise the temperatures of unpackaged in-shell eggs by means of microwave radiation, the temperature raising stage including a plurality of elongate or longitudinally extending microwave cavities that are isolated from one another so that microwaves fed into one elongate or longitudinally extending microwave cavity from a feed waveguide located above and associated with each microwave cavity do not leak into any other elongate or longitudinally extending microwave cavity, each elongate or longitudinally extending microwave cavity having a plurality of openings in a roof of the elongate or longitudinally extending microwave cavity through which microwaves are fed, which roof defines a floor of the associated feed waveguide, wherein the openings are in the form of spaced slots, with the slots reducing in dimensions in a direction of egg travel, and with the spacing between slots determined by the wavelength of the microwave field, the elongate or longitudinally extending microwave cavities being configured to displace unpackaged in-shell eggs in side-by-side relationship together in lock-step fashion through their longitudinally extending microwave cavity along the length of their longitudinally extending microwave cavity, with the unpackaged in-shell eggs being arranged in 2, 3 or 4 parallel columns within a microwave cavity and unpackaged in-shell eggs in adjacent columns being aligned in a direction transverse to the direction of travel of the unpackaged in-shell eggs, and with the width of each elongate or longitudinally extending microwave cavity being selected from the following table, depending on the number of columns of unpackaged in-shell eggs in an elongate or longitudinally extending microwave cavity, and with the microwave frequency or the microwave wavelength also being selected from the table:
| Columns of unpackaged in-shell eggs in an elongate or longitudinally extending microwave cavity | Microwave frequency range (GHz) | Microwave wavelength range (cm) | Elongate or longitudinally extending microwave cavity width range (cm) |
|---|---|---|---|
| 2 | 0.3-2.5 | 12-100 | 14-25 |
| 3 | 0.3-1.5 | 20-100 | 21-30 |
| 4 | 0.3-1 | 30-100 | 28-40 |
; and
a pasteurization stage configured to maintain raised temperatures of in-shell eggs received from the temperature raising stage for a pasteurization time sufficient to pasteurize the in-shell eggs.

9. The in-shell unpackaged egg pasteurization machine according to claim 8, which includes conveying means passing longitudinally through each elongate or longitudinally extending microwave cavity to displace unpackaged in-shell eggs along the lengths of the elongate or longitudinally extending microwave cavities.

10. The in-shell unpackaged egg pasteurization machine according to claim 8 or claim 9, wherein the conveying means is configured to support unpackaged in-shell eggs in an elongate or longitudinally extending microwave cavity with a longitudinal axis of each unpackaged in-shell egg arranged transverse to a longitudinal direction of the elongate or longitudinally extending microwave cavity.

11. The in-shell unpackaged egg pasteurization machine according to any of claims 8 to 10, which includes heated floor and/or side walls defining the elongate or longitudinally extending microwave cavities and/or which includes a hot air generator to generate or produce hot air for the pasteurization stage.

12. The in-shell unpackaged egg pasteurization machine according to any of claims 8 to 11, which includes microwave splitters to split total microwave power generated by the microwave generator into microwave power portions, and to feed portions of microwave power so obtained to each elongate or longitudinally extending microwave cavity configured for eggs to pass through the elongate or longitudinally extending microwave cavity, and a controller configured to control microwave power to each elongate or longitudinally extending microwave cavity such that the yolks of the eggs in the temperature raising stage are raised to a pasteurization temperature, the controller being configured to receive as set points or references the surface temperature of unpackaged in-shell eggs at a selected or predetermined location within each of the elongate or longitudinally extending microwave cavities.

13. The in-shell unpackaged egg pasteurization machine according to any of claims 8 to 12, wherein the elongate or longitudinally extending microwave cavities are configured to displace unpackaged in-shell eggs arranged in only 2 parallel columns, wherein the microwave frequency range is 0.3 - 2.5 GHz and wherein the width of each elongate or longitudinally extending microwave cavity is in the range of 14 - 25 cm.

## Patentansprüche

1. Pasteurisierungsverfahren für Eier in der Schale, welches beinhaltet
eine Temperaturerhöhungsstufe, die die Temperatur des Eigelbs einer Vielzahl von unverpackten Eiern in der Schale gleichzeitig und mindestens überwiegend mittels Mikrowellenstrahlung auf eine Pasteurisierungstemperatur erhöht, wobei die Temperaturerhöhungsstufe eine Vielzahl länglicher oder sich in Längsrichtung ersteckender Mikrowellenkammern beinhaltet, die voneinander isoliert sind, sodass Mikrowellen, die in einen längliche oder sich in Längsrichtung erstreckende Mikrowellenkammer eingespeist werden in keine andere längliche oder sich in Längsrichtung erstreckende Mikrowellenkammer entweichen,
wobei die Mikrowellen in jede längliche oder sich in Längsrichtung erstreckende Mikrowellenkammer von einem Speisungswellenleiter aus, der sich über jeder Mikrowellenkammer befindet und dieser zugeordnet ist, durch eine Vielzahl von Öffnungen in einem Dach jeder länglichen oder sich in Längsrichtung erstreckenden Mikrowellenkammer, wobei das Dach einen Boden des zugehörigen Speisungswellenleiters definiert, wobei die Öffnungen in der Form von beabstandeten Schlitzen vorliegen, wobei die Dimensionen der Schlitze in einer Richtung der Eierbewegung abnehmen und wobei der Abstand zwischen den Schlitzen durch die Wellenlänge des Mikrowellenfeldes bestimmt wird, eingespeist werden,
wobei die unverpackten Eier in der Schale entlang der Längsrichtungen der länglichen oder sich in Längsrichtung erstreckenden Mikrowellenkammern bewegt werden, während sie mit Mikrowellen bestrahlt werden,
wobei das Bewegen der unverpackten Eier in der Schale entlang der Längsrichtungen der länglichen oder sich in Längsrichtung erstreckenden Mikrowellenkammern das Befördern unverpackter Eier in der Schale in nebeneinanderliegender Anordnung entlang der Längsrichtungen jeder sich in Längsrichtung erstreckenden Mikrowellenkammer beinhaltet, die unverpackten Eier in der Schale in 2, 3 oder 4 parallelen Spalten innerhalb einer Mikrowellenkammer angeordnet sind, wobei die unverpackten Eier in der Schale in aneinandergrenzenden Spalten in einer transversalen Richtung zur Bewegungsrichtung der unverpackten Eier in der Schale angeordnet sind, und wobei die Spalten unverpackter Eier in der Schale gleichlaufend zusammen durch ihre sich in Längsrichtung erstreckende Mikrowellenkammer bewegt werden, und
wobei die Breite jeder länglichen oder sich in Längsrichtung erstreckenden Mikrowellenkammer aus der folgenden Tabelle ausgewählt ist, abhängig von der Anzahl der Spalten unverpackter Eier in der Schale in einer länglichen oder sich in Längsrichtung erstreckenden Mikrowellenkammer, und wobei die Mikrowellenfrequenz oder die Mikrowellenwellenlänge ebenfalls aus der Tabelle ausgewählt ist:
| Spalten von unverpackten Eiern in der Schale in einer länglichen oder sich in Längsrichtung erstreckenden Mikrowellenkammer | Mikrowellenfrequenzbereich (GHz) | Mikrowellenwellenlängenbereich (cm) | Bereich der Breite der länglichen oder sich in Längsrichtung erstreckenden Mikrowellenkammer (cm) |
|---|---|---|---|
| 2 | 0,3-2,5 | 12-100 | 14-25 |
| 3 | 0,3-1,5 | 20-100 | 21-30 |
| 4 | 0,3-1 | 30-100 | 28-40 |
; und
wobei in einer Pasteurisierungsstufe die erhöhten Temperaturen der Eier in der Schale für eine Pasteurisierungszeit aufrechterhalten werden, die ausreicht, um die Eier in der Schale zu pasteurisieren.

2. Verfahren nach Anspruch 1, wobei die länglichen oder sich in Längsrichtung erstreckenden Mikrowellenkammern nebeneinander angeordnet sind, wobei sich in Längsrichtung erstreckende Achsen der länglichen oder sich in Längsrichtung erstreckenden Mikrowellenkammern parallel sind.

3. Verfahren nach Anspruch 1 oder Anspruch 2, wobei das Bewegen von unverpackten Eiern in der Schale entlang der Längsrichtungen der länglichen oder sich in Längsrichtung erstreckenden Mikrowellenkammern das Bewegen von unverpackten Eiern in der Schale in nur 2 parallelen Spalten beinhaltet, wobei die unverpackten Eier in der Schale in aneinandergrenzenden Spalten in einer Richtung transversal zur Bewegungsrichtung der unverpackten Eier in der Schale angeordnet sind, und wobei die 2 Spalten unverpackter Eier in der Schale gemeinsam gleichlaufend durch ihre sich in Längsrichtung erstreckende Mikrowellenkammer bewegt werden, wobei der Mikrowellenfrequenzbereich 0,3 - 2,5 GHz ist und wobei die Breite jeder länglichen oder sich in Längsrichtung erstreckenden Mikrowellenkammer im Bereich von 14 - 25 cm liegt.

4. Verfahren nach einem der Ansprüche 1 bis 3, wobei die unverpackten Eier in der Schale, die entlang der Längsrichtung einer länglichen oder sich in Längsrichtung erstreckenden Mikrowellenkammer bewegt werden, mit einer Längsachse jedes unverpackten Eies in der Schale, die transversal zur Bewegungsrichtung des unverpackten Eies in der Schale angeordnet sind.

5. Verfahren nach einem der Ansprüche 1 bis 4, welches das Erwärmen eines Bodens und/oder von Seitenwänden der länglichen oder sich in Längsrichtung erstreckenden Mikrowellenkammern beinhaltet, wodurch ebenfalls mindestens das Äußere oder Schalenoberflächen der unverpackten Eier in der Schale mittels Wärmestrahlung oder thermischer Strahlung erwärmt werden, und/oder welches das Bewegen heißer Luft über die Temperaturerhöhungsstufe beinhaltet, während die Temperatur des Eigelbs einer Vielzahl unverpackter Eier in der Schale gleichzeitig und mindestens vorwiegend mittels Mikrowellenstrahlung auf eine Pasteurisierungstemperatur erhöht wird.

6. Verfahren nach einem der Ansprüche 1 bis 5, welches das Drehen von Eiern um ihre Längsachsen beinhaltet, die durch eine längliche oder sich in Längsrichtung erstreckende Mikrowellenkammer laufen, mindestens während sie sich innerhalb der länglichen oder sich in Längsrichtung erstreckenden Mikrowellenkammer befinden.

7. Verfahren nach einem der Ansprüche 1 bis 6, welches das Messen einer Oberflächentemperatur von unverpackten Eiern in der Schale innerhalb einer länglichen oder sich in Längsrichtung erstreckenden Mikrowellenkammer und das Korrelieren der Eigelbtemperatur der Eier basierend auf der Oberflächentemperatur beinhaltet.

8. Pasteurisierungsvorrichtung für unverpackte Eier in der Schale, welche beinhaltet
einen oder mehrere Mikrowellengeneratoren zur Erzeugung von Mikrowellen;
eine Temperaturerhöhungsstufe um die Temperaturen von unverpackten Eiern in der Schale mittels Mikrowellenstrahlung zu erhöhen, wobei die Temperaturerhöhungsstufe eine Vielzahl länglicher oder in Längsrichtung gestreckter Mikrowellenkammern beinhaltet, die voneinander isoliert sind, sodass Mikrowellen, die von einem Speisungswellenleiter, der sich über jeder Mikrowellenkammer befindet und dieser zugeordnet ist, in eine längliche oder sich in Längsrichtung erstreckende Mikrowellenkammer eingespeist werden, in keine andere längliche oder sich in Längsrichtung erstreckende Mikrowellenkammer entweichen, wobei jede längliche oder sich in Längsrichtung erstreckende Mikrowellenkammer eine Vielzahl von Öffnungen in einem Dach der länglichen oder sich in Längsrichtung erstreckenden Mikrowellenkammer aufweist, durch welche Mikrowellen zugeführt werden, wobei das Dach einen Boden des zugehörigen Speisungswellenleiters definiert, wobei die Öffnungen in der Form von beabstandeten Schlitzen vorliegen, wobei die Abmessungen der Schlitze in einer Richtung der Eierbewegung abnehmen und wobei der Abstand zwischen Schlitzen durch die Wellenlänge des Mikrowellenfeldes bestimmt ist, wobei die länglichen oder sich in Längsrichtung erstreckenden Mikrowellenkammern so konfiguriert sind, dass unverpackte Eier in der Schale in nebeneinanderliegender Anordnung gleichlaufend durch ihre sich in Längsrichtung erstreckende Mikrowellenkammer entlang der Längsrichtung der länglichen oder sich in Längsrichtung erstreckenden Mikrowellenkammern zusammen bewegt werden, wobei die unverpackten Eier in der Schale in 2, 3 oder 4 parallelen Spalten innerhalb einer Mikrowellenkammer angeordnet sind und wobei unverpackte Eier in der Schale in aneinandergrenzenden Spalten in einer transversalen Richtung zur Bewegungsrichtung der unverpackten Eier in der Schale angeordnet sind, und wobei die Breite jeder länglichen oder sich in Längsrichtung erstreckenden Mikrowellenkammer aus der folgenden Tabelle ausgewählt ist, abhängig von der Anzahl der Spalten unverpackter Eier in der Schale in einer länglichen oder sich in Längsrichtung erstreckenden Mikrowellenkammer, und wobei die Mikrowellenfrequenz oder die Mikrowellenwellenlänge ebenfalls aus der Tabelle ausgewählt ist:
| Spalten von unverpackten Eiern in der Schale in einer länglichen oder sich in Längsrichtung erstreckenden Mikrowellenkammer | Mikrowellenfrequenzbereich (GHz) | Mikrowellenwellenlängenbereich (cm) | Bereich der Breite der länglichen oder sich in Längsrichtung erstreckenden Mikrowellenkammer (cm) |
|---|---|---|---|
| 2 | 0,3-2,5 | 12-100 | 14-25 |
| 3 | 0,3-1,5 | 20-100 | 21-30 |
| 4 | 0,3-1 | 30-100 | 28-40 |
; und
eine Pasteurisierungsstufe, die so konfiguriert ist, dass erhöhte Temperaturen der Eier in der Schale aus der Temperaturerhöhungsstufe für eine Pasteurisierungszeit aufrechterhalten werden, die ausreichen, um die Eier in der Schale zu pasteurisieren.

9. Pasteurisierungsvorrichtung für unverpackte Eier in der Schale nach Anspruch 8, welche eine Befördereinrichtung beinhaltet, die in Längsrichtung durch jede längliche oder sich in Längsrichtung erstreckende Mikrowellenkammer hindurchtritt, um unverpackte Eier in der Schale entlang der Längsrichtung der länglichen oder sich in Längsrichtung erstreckenden Mikrowellenkammern zu bewegen.

10. Pasteurisierungsvorrichtung für unverpackte Eier in der Schale nach Anspruch 8 oder Anspruch 9, wobei die Befördereinrichtung so konfiguriert ist, dass unverpackte Eier in der Schale in einer länglichen oder sich in Längsrichtung erstreckenden Mikrowellenkammer gestützt werden, wobei eine Längsachse jedes unverpackten Eies in der Schale transversal zu einer Längsrichtung der länglichen oder sich in Längsrichtung erstreckenden Mikrowellenkammer angeordnet ist.

11. Pasteurisierungsvorrichtung für unverpackte Eier in der Schale nach einem der Ansprüche 8 bis 10, welche beheizte Boden- und/oder Seitenwände beinhaltet, die die länglichen oder sich in Längsrichtung erstreckenden Mikrowellenkammern definieren und/oder die einen Heißluftgenerator beinhaltet, um Heißluft für die Pasteurisierungsstufe zu erzeugen oder zu produzieren.

12. Pasteurisierungsvorrichtung für unverpackte Eier in der Schale nach einem der Ansprüche 8 bis 11, welche Mikrowellensplitter, um die vom Mikrowellengenerator erzeugte Gesamtmikrowellenleistung in Mikrowellenleistungsanteile aufzuteilen und die so erhaltenen Mikrowellenleistungsanteile jeder länglichen oder sich in Längsrichtung erstreckenden Mikrowellenkammer zuzuführen, die konfiguriert ist, damit Eier die längliche oder sich in Längsrichtung erstreckende Mikrowellenkammer durchlaufen, und eine Steuereinheit beinhaltet, die so konfiguriert ist, dass die Mikrowellenleistung für jede längliche oder sich in Längsrichtung erstreckende Mikrowellenkammer gesteuert wird, sodass die Eigelb der Eier in der Temperaturerhöhungsstufe auf eine Pasteurisierungstemperatur erhitzt werden, wobei die Steuereinheit so konfiguriert ist, dass sie als Führungsgrößen oder Referenzen die Oberflächentemperatur von unverpackten Eiern in der Schale an einem ausgewählten oder bestimmten Ort innerhalb jeder der länglichen oder sich in Längsrichtung erstreckenden Mikrowellenkammern entgegennimmt.

13. Pasteurisierungsvorrichtung für unverpackte Eier in der Schale nach einem der Ansprüche 8 bis 12, wobei die länglichen oder sich in Längsrichtung erstreckenden Mikrowellenkammern so konfiguriert sind, dass unverpackte Eier in der Schale, die in nur zwei parallelen Spalten angeordnet sind, bewegt werden, wobei der Mikrowellenfrequenzbereich 0,3 - 2,5 GHz ist und wobei die Breite jeder länglichen oder sich in Längsrichtung erstreckenden Mikrowellenkammer im Bereich von 14 - 25 cm liegt.

## Revendications

1. Procédé de pasteurisation d'œufs en coquille, lequel comporte,
dans une phase d'augmentation de température, l'augmentation de la température du jaune d'une pluralité d'œufs en coquille non emballés, simultanément et au moins principalement au moyen d'un rayonnement micro-ondes, jusqu'à une température de pasteurisation, la phase d'augmentation de température comportant une pluralité de cavités micro-ondes allongées ou s'étendant longitudinalement qui sont isolées les unes des autres de sorte que les micro-ondes introduites dans une cavité micro-ondes allongée ou s'étendant longitudinalement ne s'infiltrent pas dans une autre cavité micro-ondes allongée ou s'étendant longitudinalement quelconque,
les micro-ondes étant introduites dans chaque cavité micro-ondes allongée ou s'étendant longitudinalement à partir d'un guide d'ondes d'alimentation situé au-dessus de chaque cavité micro-ondes et associé à celle-ci, à travers une pluralité d'ouvertures dans une partie supérieure de chaque cavité micro-ondes allongée ou s'étendant longitudinalement, laquelle partie supérieure définit un plancher du guide d'ondes d'alimentation associé, dans lequel les ouvertures se présentent sous la forme de fentes espacées, les dimensions des fentes se réduisant dans une direction de parcours d'œuf, et l'espacement entre les fentes étant déterminé par la longueur d'onde du champ de micro-ondes,
les œufs en coquille non emballés étant déplacés le long des cavités micro-ondes allongées ou s'étendant longitudinalement tout en étant irradiés par les micro-ondes,
le déplacement des œufs en coquille non emballés tout le long des cavités micro-ondes allongées ou s'étendant longitudinalement comportant le passage des œufs en coquille non emballés côte à côte tout le long de chaque cavité micro-ondes s'étendant longitudinalement, les œufs en coquille non emballés étant disposés en 2, 3 ou 4 colonnes parallèles à l'intérieur d'une cavité micro-ondes, les œufs en coquille non emballés dans les colonnes adjacentes étant alignés dans une direction transversale à la direction de parcours des œufs en coquille non emballés, et lesdites colonnes d'œufs en coquille non emballés étant déplacées ensemble de manière synchronisée à travers leur cavité micro-ondes s'étendant longitudinalement, et
la largeur de chaque cavité micro-ondes allongée ou s'étendant longitudinalement étant choisie dans le tableau suivant, en fonction du nombre de colonnes d'œufs en coquille non emballés dans une cavité micro-ondes allongée ou s'étendant longitudinalement, et la fréquence des micro-ondes ou la longueur d'onde des micro-ondes étant également choisie dans le tableau :
| Colonnes d'œufs en coquille non emballés dans une cavité micro-ondes allongée ou s'étendant longitudinalement | Plage de fréquences des micro-ondes (GHz) | Plage de longueur d'onde des micro-ondes (cm) | Plage de largeur des cavités micro-ondes allongées ou s'étendant longitudinalement (cm) |
|---|---|---|---|
| 2 | 0,3-2,5 | 12-100 | 14-25 |
| 3 | 0,3-1,5 | 20-100 | 21-30 |
| 4 | 0,3-1 | 30-100 | 28-40 |
; et
dans une phase de pasteurisation, le maintien des températures augmentées des œufs en coquille pendant une durée de pasteurisation suffisante pour pasteuriser les œufs en coquille.

2. Procédé selon la revendication 1, dans lequel les cavités micro-ondes allongées ou s'étendant longitudinalement sont disposées côte à côte, les axes s'étendant longitudinalement des cavités micro-ondes allongées ou s'étendant longitudinalement étant parallèles.

3. Procédé selon la revendication 1 ou la revendication 2, dans lequel le déplacement des œufs en coquille non emballés tout le long des cavités micro-ondes allongées ou s'étendant longitudinalement comporte le déplacement des œufs en coquille non emballés disposés en seulement 2 colonnes parallèles, les œufs en coquille non emballés dans les colonnes adjacentes étant alignés dans une direction transversale à la direction de parcours des œufs en coquille non emballés, et les 2 colonnes d'œufs en coquille non emballés étant déplacées ensemble de manière synchronisée à travers leur cavité micro-ondes s'étendant longitudinalement, dans lequel la plage de fréquences des micro-ondes va de 0,3 à 2,5 GHz et dans lequel la largeur de chaque cavité micro-ondes allongée ou s'étendant longitudinalement se situe dans la plage de 14 à 25 cm.

4. Procédé selon l'une quelconque des revendications 1 à 3, dans lequel les œufs en coquille non emballés qui sont déplacés tout le long d'une cavité micro-ondes allongée ou s'étendant longitudinalement sont disposés de telle sorte que l'axe longitudinal de chaque œuf en coquille non emballé soit transversal à la direction de parcours de l'œuf en coquille non emballé.

5. Procédé selon l'une quelconque des revendications 1 à 4, lequel comporte le chauffage d'un plancher et/ou de parois latérales des cavités micro-ondes allongées ou s'étendant longitudinalement, ce qui permet de chauffer également au moins les surfaces externes ou les surfaces des coquilles des œufs en coquille non emballés au moyen d'un rayonnement de chaleur ou d'un rayonnement thermique, et/ou lequel comporte le fait de mouvoir de l'air chaud dans la phase d'élévation de température pendant que la température du jaune d'une pluralité d'œufs en coquille non emballés est augmentée simultanément et au moins principalement au moyen d'un rayonnement micro-ondes à une température de pasteurisation.

6. Procédé selon l'une quelconque des revendications 1 à 5, lequel comporte le retournement des œufs traversant une cavité micro-ondes allongée ou s'étendant longitudinalement autour de leurs axes longitudinaux au moins pendant qu'ils se trouvent dans la cavité micro-ondes allongée ou s'étendant longitudinalement.

7. Procédé selon l'une quelconque des revendications 1 à 6, lequel comporte la mesure d'une température de surface des œufs en coquille non emballés à l'intérieur d'une cavité micro-ondes allongée ou s'étendant longitudinalement, et la corrélation de la température du jaune des œufs sur la base de la température de surface.

8. Machine de pasteurisation d'œufs en coquille non emballés, laquelle comporte
un ou plusieurs générateurs de micro-ondes permettant de générer des micro-ondes ;
une phase d'augmentation de température permettant d'augmenter les températures des œufs en coquille non emballés au moyen d'un rayonnement micro-ondes, la phase d'augmentation de température comportant l'isolation d'une pluralité de cavités micro-ondes allongées ou s'étendant longitudinalement les unes des autres de sorte que les micro-ondes introduites dans une cavité micro-ondes allongée ou s'étendant longitudinalement à partir d'un guide d'ondes d'alimentation situé au-dessus de chaque cavité micro-ondes et associé à celle-ci ne s'infiltrent pas dans une autre cavité micro-ondes allongée ou s'étendant longitudinalement quelconque, chaque cavité micro-ondes allongée ou s'étendant longitudinalement ayant une pluralité d'ouvertures dans une partie supérieure de la cavité micro-ondes allongée ou s'étendant longitudinalement à travers lesquelles des micro-ondes sont introduites, laquelle partie supérieure définit un plancher du guide d'ondes d'alimentation associé, dans lequel les ouvertures se présentent sous la forme de fentes espacées, les dimensions des fentes se réduisant dans une direction de parcours d'œuf, et l'espacement entre les fentes étant déterminé par la longueur d'onde du champ de micro-ondes, les cavités micro-ondes allongées ou s'étendant longitudinalement étant configurées pour déplacer des œufs en coquille non emballés, côte à côte, ensemble et de manière synchronisée à travers leur cavité micro-ondes s'étendant longitudinalement tout le long de leur cavité micro-ondes s'étendant longitudinalement, les œufs en coquille non emballés étant disposés en 2, 3 ou 4 colonnes parallèles à l'intérieur d'une cavité micro-ondes et les œufs en coquille non emballés dans des colonnes adjacentes étant alignés dans une direction transversale à la direction de parcours des œufs en coquille non emballés, et la largeur de chaque cavité micro-ondes allongée ou s'étendant longitudinalement étant choisie dans le tableau suivant, en fonction du nombre de colonnes d'œufs en coquille non emballés dans une cavité micro-ondes allongée ou s'étendant longitudinalement, et la fréquence des micro-ondes ou la longueur d'onde des micro-ondes étant également choisies dans le tableau :
| Colonnes d'œufs en coquille non emballés dans une cavité micro-ondes allongée ou s'étendant longitudinalement | Plage de fréquences des micro-ondes (GHz) | Plage de longueur d'onde des micro-ondes (cm) | Plage de largeur des cavités micro-ondes allongées ou s'étendant longitudinalement (cm) |
|---|---|---|---|
| 2 | 0,3-2,5 | 12-100 | 14-25 |
| 3 | 0,3-1,5 | 20-100 | 21-30 |
| 4 | 0,3-1 | 30-100 | 28-40 |
; et
une phase de pasteurisation conçue pour maintenir les températures augmentées des œufs en coquille reçus de la phase d'augmentation de température pendant une durée de pasteurisation suffisante pour pasteuriser les œufs en coquille.

9. Machine de pasteurisation d'œufs en coquille non emballés selon la revendication 8, laquelle comporte un moyen de transport passant longitudinalement à travers chaque cavité micro-ondes allongée ou s'étendant longitudinalement pour déplacer les œufs en coquille non emballés tout le long des cavités micro-ondes allongées ou s'étendant longitudinalement.

10. Machine de pasteurisation d'œufs en coquille non emballés selon la revendication 8 ou la revendication 9, dans laquelle le moyen de transport est conçu pour soutenir les œufs en coquille non emballés dans une cavité micro-ondes allongée ou longitudinale, l'axe longitudinal de chaque œuf en coquille non emballé étant disposé transversalement à la direction longitudinale de la cavité micro-ondes allongée ou s'étendant longitudinalement.

11. Machine de pasteurisation d'œufs en coquille non emballés selon l'une quelconque des revendications 8 à 10, laquelle comporte un plancher chauffé et/ou des parois latérales définissant les cavités micro-ondes allongées ou s'étendant longitudinalement et/ou laquelle comporte un générateur d'air chaud destiné à générer ou produire de l'air chaud pour la phase de pasteurisation.

12. Machine de pasteurisation d'œufs en coquille non emballés selon l'une quelconque des revendications 8 à 11, laquelle comporte des séparateurs de micro-ondes destinés à séparer la puissance micro-ondes totale de générée par le générateur de micro-ondes en portions de puissance micro-ondes, et pour introduire les portions de puissance de micro-ondes ainsi obtenues dans chaque cavité micro-ondes allongée ou s'étendant longitudinalement conçue pour que les œufs traversent la cavité micro-ondes allongée ou s'étendant longitudinalement, et un dispositif de régulation configuré pour réguler la puissance micro-ondes de chaque cavité micro-ondes allongée ou s'étendant longitudinalement de telle sorte que les jaunes des œufs dans la phase d'augmentation de température sont augmentés à une température de pasteurisation, le dispositif de régulation étant configuré pour recevoir, comme points de consigne ou références, la température de surface des œufs en coquille non emballés au niveau d'un emplacement choisi ou prédéterminé dans chacune des cavités micro-ondes allongées ou s'étendant longitudinalement.

13. Machine de pasteurisation d'œufs en coquille non emballés selon l'une quelconque des revendications 8 à 12, dans laquelle les cavités micro-ondes allongées ou s'étendant longitudinalement sont conçues pour déplacer des œufs en coquille non emballés disposés en seulement 2 colonnes parallèles, dans laquelle la plage de fréquences des micro-ondes va de 0,3 à 2,5 GHz et dans laquelle la largeur de chaque cavité micro-ondes allongée ou s'étendant longitudinalement se situe dans la plage de 14 à 25 cm.
